# EUROPÄISCHE PATENTSCHRIFT

(11) **EP 3 314 137 B1**
(45) Veröffentlichungstag und Bekanntmachung des Hinweises auf die Patenterteilung: **19.02.2020**
(21) Anmeldenummer: 16733032.3
(22) Anmeldetag: 22.06.2016
(51) Int. Cl.: F16D 3/04

(54) **KUPPLUNGSVORRICHTUNG UND KLAPPENEINRICHTUNG FÜR EINE FRISCHLUFTANLAGE MIT EINER KUPPLUNGSVORRICHTUNG**
CLUTCH APPARATUS AND FLAP DEVICE FOR A FRESH-AIR SYSTEM HAVING A CLUTCH APPARATUS
DISPOSITIF D'ACCOUPLEMENT ET SYSTÈME DE CLAPET POUR INSTALLATION D'ALIMENTATION EN AIR FRAIS COMPRENANT UN DISPOSITIF D'ACCOUPLEMENT

(30) Priorität: 26.06.2015 DE 102015211946
(43) Veröffentlichungstag der Anmeldung: 02.05.2018
(73) Patentinhaber: Mahle International GmbH, 70376 Stuttgart (DE)
(72) Erfinder: DETTINGER, Marco, 75181 Pforzheim (DE); ENDRESS, Mathias, 70176 Stuttgart (DE); GÜTH, Wolfgang, 70597 Stuttgart (DE); WEINMANN, Johannes, 70327 Stuttgart (DE)
(74) Vertreter: BRP Renaud & Partner mbB Rechtsanwälte Patentanwälte Steuerberater
(86) Internationale Anmeldenummer: PCT/EP2016/064376
(87) Internationale Veröffentlichungsnummer: WO 2016/207197

(56) Entgegenhaltungen:
- DE-A1-102006 043 897
- DE-A1-102013 215 623

## Beschreibung

Die Erfindung betrifft eine Kupplungsvorrichtung zur Übertragung eines Drehmoments von einem ersten Wellenglied auf ein axial gegenüberliegendes zweites Wellenglied, mit einem Kupplungsglied, das zwischen den beiden Wellengliedern angeordnet ist, insbesondere gemäß dem Oberbegriff des Anspruchs 1. Ferner betrifft die Erfindung eine Klappeneinrichtung für eine Frischluftanlage mit einer solchen Kupplungsvorrichtung. Ferner betrifft die Erfindung eine Frischluftanlage für ein Kraftfahrzeug mit einer solchen Klappeneinrichtung.

Solche Kupplungsvorrichtungen werden häufig in Kraftfahrzeugen eingesetzt, um Stellantriebe mit den angetriebenen Elementen zu koppeln. Häufig ist erforderlich, dass die Kupplungsvorrichtung eine leichte Verkippung oder radiale Verschiebung ausgleichen kann. Des Weiteren herrscht in Kraftfahrzeugen generell ein Platzmangel, so dass die Kupplungsvorrichtung platzsparend ausgebildet sein sollte.

Aus der DE 10 2006 048 678 B4 und aus der DE 10 2006 043 897 A1 ist eine Kupplungsvorrichtung zur Übertragung eines Drehmoments von einer Welle auf eine axial gegenüberliegende Welle bekannt, wobei ein an der ersten Welle angeordneter Endabschnitt radial nach außen weisende, sich gegenüberliegende Vorsprünge aufweist, die in sich axial erstreckende Ausnehmungen eines Kupplungsgliedes greifen, ein an der zweiten Welle angeordneter Endabschnitt nach radial innen weisende, sich gegenüberliegende Ausnehmungen aufweist, die in sich axial erstreckende Vorsprünge des Kupplungsgliedes greifen.

Der vorliegenden Erfindung liegt die Aufgabe zugrunde, eine verbesserte, oder zumindest andere, Ausführungsform einer Kupplungsvorrichtung zu schaffen, die sich durch eine kompakte Bauweise und einfache Montage auszeichnet.

Diese Aufgabe wird erfindungsgemäß durch die Gegenstände der unabhängigen Ansprüche gelöst. Vorteilhafte Weiterbildungen sind Gegenstand der abhängigen Ansprüche.

Die Erfindung beruht auf dem allgemeinen Gedanken, für die Kupplungsvorrichtung ein Kupplungsglied zu verwenden, welches an zumindest eines der Wellenglieder befestigt werden kann und trotzdem sowohl eine Verkippung als auch eine radiale Verschiebung ausgleichen kann. Erfindungsgemäß ist vorgesehen, dass der zweite Endabschnitt mindestens ein Rastelement aufweist und dass das Kupplungsglied an der zweiten Seite mindestens ein dazu komplementäres Gegenrastelement aufweist. Durch das Rastelement und das Gegenrastelement kann das Kupplungsglied lösbar an dem zweiten Endabschnitt des zweiten Wellengliedes gehalten sein. Bei der Montage der Kupplungsvorrichtung kann also das Kupplungsglied durch den zweiten Endabschnitt des zweiten Wellengliedes gehalten sein, so dass das Kupplungsglied nicht separat gehalten und geführt werden muss, um die Kupplungsvorrichtung zu montieren. Dadurch wird also die Montage der Kupplungsvorrichtung erheblich vereinfacht.

Eine günstige Variante sieht vor, dass das jeweilige Rastelement und das jeweilige Gegenrastelement ineinander greifen und das Kupplungsglied an den zweiten Endabschnitt axial halten. Dadurch kann wie oben beschrieben die Montage der Kupplungsvorrichtung erleichtert werden.

Eine besonders günstige Variante sieht vor, dass das jeweilige Rastelement durch eine Rastnase gebildet ist. Rastnasen haben sich als Rastelement bewährt, so dass eine einfache und zuverlässige Rastverbindung ermöglicht wird.

Eine weitere besonders günstige Variante sieht vor, dass das jeweilige Gegenrastelement durch eine Rastkontur gebildet ist, die an dem ringförmigen Rand ausgebildet ist. In diese Rastkontur kann das Rastelement eingreifen, um eine Rastverbindung herzustellen.

Eine vorteilhafte Möglichkeit sieht vor, dass das jeweilige Gegenrastelement an einer über den Grundkörper vorstehenden Innenseite des ringförmigen Randes ausgebildet ist. Durch diese Ausbildung der Rastverbindung wird kein zusätzlicher Platz für die Rastverbindung benötigt. Folglich kann durch die Rastverbindung somit die Montage der Kupplungsvorrichtung erleichtert werden, ohne zusätzlichen Bauraum zu benötigen.

Eine besonders vorteilhafte Möglichkeit sieht vor, dass zwei Rastelemente vorgesehen sind, die sich diametral gegenüberliegen und/oder dass zwei Gegenrastelemente vorgesehen sind, die sich diametral gegenüberliegen. Zwei Rastelemente und Gegenrastelemente sind ausreichend, um eine ausreichend stabile Rastverbindung zwischen dem Kupplungsglied und dem zweiten Wellenglied zu erzeugen. Durch die diametrale Anordnung der Rastelemente und der Gegenrastelemente zueinander kann das Kupplungsglied besser an dem zweiten Wellenglied gehalten werden, insbesondere wird somit eine Neigung des Kupplungsgliedes sich gegenüber dem Endabschnitt des zweiten Wellengliedes zu verkippen, reduziert.

Zweckmäßig ist es, dass das Kupplungsglied einen scheibenförmigen Grundkörper aufweist, dass das Kupplungsglied einen an dem Grundkörper umlaufenden, ringförmigen, axial beidseitig über den Grundkörper überstehenden Rand aufweist, dass in den ringförmigen Rand auf einer ersten Seite des Kupplungsgliedes erste Ausnehmungen eingebracht sind, dass in den ringförmigen Rand auf der zweiten Seite des Kupplungsgliedes zweite Ausnehmungen eingebracht sind, dass das erste Wellenglied einen ersten Endabschnitt aufweist, der sich axial erstreckende erste Vorsprünge aufweist, dass mindestens ein solcher erster Vorsprung des ersten Endabschnitts in mindestens eine der ersten Ausnehmungen des Kupplungsgliedes eingreift, dass das zweite Wellenglied einen zweiten Endabschnitt aufweist, der sich axial erstreckende zweite Vorsprünge aufweist, und dass mindestens ein solcher zweiter Vorsprung des zweiten Endabschnitts in mindestens eine der zweiten Ausnehmungen des Kupplungsgliedes eingreift. Durch den scheibenförmigen Grundkörper wird ein axial platzsparendes Kupplungsglied gebildet. Somit kann durch eine solche Kupplungsvorrichtung Bauraum eingespart werden. Des Weiteren ermöglicht die Ausgestaltung der Ausnehmungen in dem ringförmigen Rand des Kupplungsgliedes, eine drehfeste Kopplung des Kupplungsgliedes mit den jeweiligen Wellengliedern, so dass auch eine drehfeste Kopplung zwischen den beiden Wellengliedern erfolgen kann. Gleichzeitig erlaubt diese Konstruktion eine leichte radiale Verschiebung oder eine Verkippung der beiden Wellenglieder zueinander.

Eine zweckmäßige Lösung sieht vor, dass überstehende Rand in Umfangsrichtung mehr als die Hälfte des Umfangs einnimmt, während die ersten Ausnehmungen in dem Rand zusammengenommen in Umfangsrichtung weniger als die Hälfte des Umfangs einnehmen und die zweiten Ausnehmungen in dem Rand zusammengenommen in Umfangsrichtung weniger als die Hälfte des Umfangs einnehmen.

In der Beschreibung und den beigefügten Ansprüchen beziehen sich die Begriffe "axial", "radial", "Umfangsrichtung" und "Umfang" auf den Grundkörper des Kupplungsgliedes.

Eine weitere zweckmäßige Lösung sieht vor, dass die ersten Vorsprünge in Umfangsrichtung weniger als die Hälfte des Umfangs einnehmen und dass die zweiten Vorsprünge weniger als die Hälfte des Umfangs einnehmen.

Eine günstige Möglichkeit sieht vor, dass jeweils zwei solche Ausnehmungen auf der jeweiligen Seite des Kupplungsgliedes sich diametral gegenüberliegen. Dadurch kann ein Verkippen der beiden Wellenglieder zueinander besser ausgeglichen werden.

Eine weitere günstige Möglichkeit sieht vor, dass auf der ersten Seite und auf der zweiten Seite des Kupplungsgliedes jeweils zwei Ausnehmungen in den ringförmigen Rand eingebracht sind. Auch diese Ausgestaltung erhöht die Toleranz der Kupplungsvorrichtung gegen ein axiales Verkippen der beiden Wellenglieder zueinander.

Eine besonders günstige Möglichkeit sieht vor, dass die ersten Ausnehmungen der ersten Seite um ungefähr 90° versetzt zu den zweiten Ausnehmungen der zweiten Seite angeordnet sind. Auf diese Weise kann ein Verkippen der beiden Wellenglieder zueinander noch besser ausgeglichen werden.

In der Beschreibung und den beigefügten Ansprüchen wird unter "ungefähr 90°" ein Winkelbereich zwischen 80° und 100°, vorzugsweise ein Winkelbereich zwischen 85° und 95°, besonders bevorzugt ein Winkelbereich zwischen 88° und 92° verstanden.

Eine weitere besonders günstige Möglichkeit sieht vor, dass der erste Endabschnitt zwei sich axial erstreckende erste Vorsprünge aufweist und dass der zweite Endabschnitt zwei sich axial erstreckende zweite Vorsprünge aufweist. Zwei Vorsprünge, welche in die Ausnehmungen des Kupplungsgliedes eingreifen, sind ausreichend, um ein Drehmoment zwischen dem Kupplungsglied und den Wellengliedern zu übertragen. Die Verwendung von lediglich zwei Vorsprüngen erhöht die Toleranz der Kupplungsvorrichtung gegen ein Verkippen der beiden Wellenglieder zueinander.

Eine vorteilhafte Lösung sieht vor, dass die ersten Vorsprünge des ersten Endabschnitts exzentrisch angeordnet sind und sich diametral gegenüberliegen. Dadurch, dass die Vorsprünge exzentrisch angeordnet sind, liegen diese nicht auf einer Achse des jeweiligen Wellengliedes. Dadurch können die Vorsprünge besonders günstig ein Drehmoment auf das Wellenglied übertragen. Dadurch, dass sich die Vorsprünge diametral gegenüberliegen, wird die Belastung des Lagers des Wellengliedes reduziert.

Eine weitere vorteilhafte Lösung sieht vor, dass die zweiten Vorsprünge des zweiten Endabschnitts exzentrisch angeordnet sind und sich diametral gegenüberliegen. Dadurch ergeben sich die gleichen Vorteile wie für die ersten Vorsprünge des ersten Endabschnitts auf der Beschreibung insoweit Bezug genommen wird.

Eine besonders vorteilhafte Lösung sieht vor, dass die ersten Vorsprünge des ersten Endabschnitts jeweils in eine der ersten Ausnehmungen auf der ersten Seite des Kupplungsgliedes eingreifen, und dass die zweiten Vorsprünge des zweiten Endabschnitts jeweils in eine der zweiten Ausnehmungen auf der zweiten Seite des Kupplungsgliedes eingreifen. Auf diese Weise können alle Vorsprünge genutzt werden, um eine Drehmomentübertragung von dem ersten Wellenglied zu dem Kupplungsglied und umgekehrt und eine Drehmomentübertragung zwischen dem Kupplungsglied und dem zweiten Wellenglied und umgekehrt zu erzielen.

Ferner wird die oben genannte Aufgabe durch eine Klappeneinrichtung für eine Frischluftanlage gelöst, mit mindestens einer Klappe, die drehfest mit einer Klappenwelle gekoppelt ist, mit einem Stellantrieb zum Antreiben der Welle, der eine Antriebswelle aufweist, mit einer solchen Kupplungsvorrichtung, wobei das erste Wellenglied drehfest mit der Antriebswelle verbunden ist, während das zweite Wellenglied drehfest mit der Klappenwelle verbunden ist. Somit können die Vorteile der Kupplungsvorrichtung bei der Klappeneinrichtung ausgenutzt werden. Auf die vorstehende Beschreibung der Kupplungsvorrichtung wird insofern Bezug genommen.

Darüber hinaus wird die oben genannte Aufgabe durch eine Frischluftanlage für ein Kraftfahrzeug mit einer solchen Klappeneinrichtung gelöst. Die Vorteile der Klappeneinrichtung und damit auch der Kupplungsvorrichtung übertragen sich somit auf die Frischluftanlage, auf deren vorstehende Beschreibung insoweit Bezug genommen wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine perspektivische Darstellung eines Stellantriebs mit einer Kupplungsvorrichtung,
- Fig. 2: eine perspektivische Ansicht der Kupplungsvorrichtung aus Fig. 1 aus einer anderen Richtung,
- Fig. 3: eine perspektivische Darstellung eines Kupplungsgliedes und eines zweiten Wellengliedes gemäß einer zweiten Ausführungsform der Erfindung, und
- Fig. 4: eine weitere perspektivische Darstellung des Kupplungsgliedes und des zweiten Wellengliedes aus Fig. 3, aus einem anderen Blickwinkel.

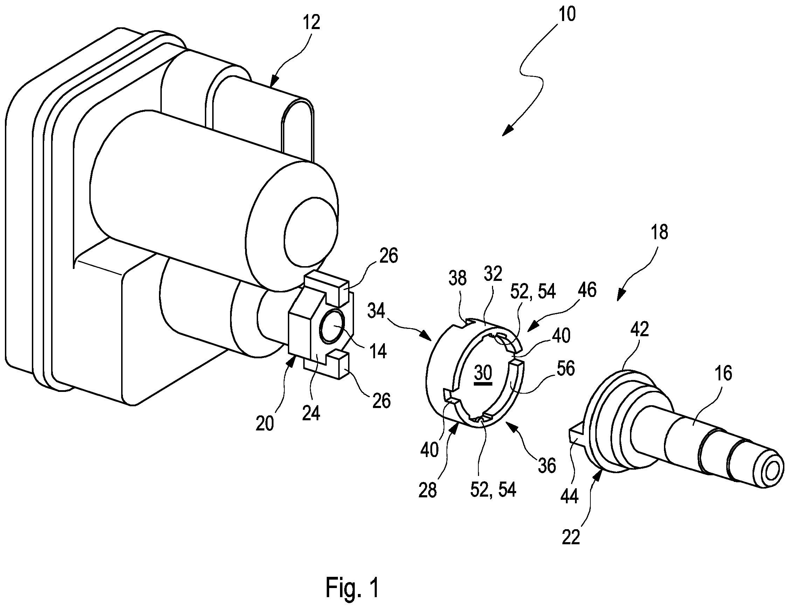

Eine in Fig. 1 teilweise dargestellte Klappeneinrichtung 10 wird beispielsweise in einer Frischluftanlage für ein Kraftfahrzeug verwendet, um Frischluft gezielt zu lenken. Die Klappeneinrichtung 10 weist einen Stellantrieb 12 mit einer Antriebswelle 14, die von dem Stellantrieb 12 angetrieben wird, eine Klappe, welche drehfest mit einer Klappenwelle 16 verbunden ist, und eine Kupplungsvorrichtung 18, welche die Antriebswelle 14 mit der Klappenwelle 16 drehfest koppelt, auf.

Die Kupplungsvorrichtung 18 weist ein erstes Wellenglied 20 und ein zweites Wellenglied 22 auf. Das erste Wellenglied 20 ist drehfest mit der Antriebswelle 14 verbunden oder durch die Antriebswelle 14 gebildet. Das zweite Wellenglied 22 ist mit der Klappenwelle 16 drehfest verbunden oder durch diese gebildet.

Das erste Wellenglied 20 weist einen ersten Endabschnitt 24 auf, an welchem mehrere, beispielsweise zwei, erste Vorsprünge 26 ausgebildet sind. Die ersten Vorsprünge 26 sind bezüglich einer Achse des Wellenglieds 20 radial nach außen versetzt angeordnet. Des Weiteren erstrecken sich die ersten Vorsprünge 26 in axialer Richtung von dem Endabschnitt 24 aus. In Einbaulage erstrecken sich die ersten Vorsprünge 26 in Richtung eines Kupplungsgliedes 28.

Das Kupplungsglied 28 koppelt das erste Wellenglied 20 und das zweite Wellenglied 22 drehfest miteinander. Dazu weist das Kupplungsglied 28 einen Grundkörper 30 auf, welcher im Wesentlichen scheibenförmig ausgebildet ist. Um den Grundkörper 30 umlaufend ist ein Rand 32 gebildet, der in axialer Richtung über den Grundkörper 30 hinaussteht. Insbesondere steht der Rand 32 an einer ersten Seite 34 des Kupplungsglieds 28 in axialer Richtung über den Grundkörper 30 hinaus. Ferner ragt der Rand 32 an einer zweiten Seite 36 des Kupplungsgliedes 28 über den Grundkörper 30 in axialer Richtung hinaus.

In den Rand 32 sind auf der ersten Seite 34 des Kupplungsgliedes 28 erste Ausnehmungen 38, beispielsweise zwei, eingebracht. Die ersten Ausnehmungen 38 sind vorzugsweise diametral zueinander angeordnet. Dadurch können über die ersten Ausnehmungen 38 in günstiger Weise Drehmomente auf das Kupplungsglied 28 übertragen werden.

Im Einbauzustand ist die erste Seite 34 des Kupplungsgliedes 28 dem ersten Wellenglied 20 zugewandt. Des Weiteren greifen die ersten Vorsprünge 26 des ersten Endabschnitts 24 in die ersten Ausnehmungen 38 des Kupplungsgliedes 28 ein. Dadurch wird eine drehfeste Kopplung zwischen dem Kupplungsglied 28 und dem ersten Endabschnitt 24 des ersten Wellenglieds 20 gebildet.

Darüber hinaus weist der Rand 32 des Kupplungsgliedes 28 mehrere, beispielsweise zwei, zweite Ausnehmungen 40 auf, welche auf der zweiten Seite 36 des zweiten Wellengliedes 22 eingebracht sind. Die zweiten Ausnehmungen 40 sind diametral zueinander angeordnet. Im Einbauzustand ist die zweite Seite 36 des Kupplungsgliedes 28 dem zweiten Wellenglied 22 zugewandt.

Die beiden zweiten Ausnehmungen 40 sind in ihrer Umfangsposition zu den ersten Ausnehmungen 38 versetzt angeordnet. Vorzugsweise sind die zweiten Ausnehmungen 40 zu den ersten Ausnehmungen 38 um einen Winkel von ungefähr 90° zueinander versetzt. Ungefähr 90° heißt in der Anmeldung und den beigefügten Ansprüchen vorzugsweise in einem Winkelbereich von 80° bis 100°, besonders bevorzugt ein Winkelbereich von 85° bis 95°, noch bevorzugter in einem Winkelbereich von 88° bis 92°.

Das zweite Wellenglied 22 weist einen zweiten Endabschnitt 42 auf, an welchem mehrere, beispielsweise zwei, zweite Vorsprünge 44 gebildet sind. Die zweiten Vorsprünge 44 sind radial bezüglich einer Achse des zweiten Wellengliedes 22 nach außen versetzt angeordnet. Sie sind also außermittig, insbesondere exzentrisch angeordnet. Des Weiteren erstrecken sich die zweiten Vorsprünge 44 in axialer Richtung von dem zweiten Endabschnitt 42 aus in Richtung des Kupplungsgliedes 28. Die beiden zweiten Vorsprünge 44 sind diametral zueinander angeordnet.

In Einbaulage greifen die zweiten Vorsprünge 44 in die zweiten Ausnehmungen 40 des Kupplungsgliedes 28 ein und bilden somit eine drehfeste formschlüssige Kopplung zwischen dem zweiten Endabschnitt 42 des zweiten Wellenglieds 22 und dem Kupplungsglied 28.

Durch die drehfeste Kopplung zwischen dem ersten Wellenglied 20 und dem Kupplungsglied 28 und die drehfeste Kupplung zwischen dem Kupplungsglied 28 und dem zweiten Wellenglied 22 ist somit das erste Wellenglied 20 mit dem zweiten Wellenglied 22 drehfest gekoppelt. Durch die diametrale Anordnung der ersten Vorsprünge 26 und zweiten Vorsprünge 44 und der entsprechenden Anordnung der ersten Ausnehmungen 38 und zweiten Ausnehmungen 40, welche zudem um ungefähr 90° zueinander versetzt angeordnet sind, kann eine Toleranz bezüglich der Ausrichtung des ersten Wellengliedes 20 zu dem zweiten Wellenglied 22 erzielt werden. Insbesondere sind dadurch ein geringer radialer Versatz zwischen dem ersten Wellenglied 20 und dem zweiten Wellenglied 22 und ein Verkippen der Achsen des ersten Wellenglieds und des zweiten Wellenglieds 22 zueinander im geringen Maße tolerierbar. Dies erleichtert erheblich die Konstruktion der Klappeneinrichtung, da die Lagerung des ersten Wellenglieds 20 und des zweiten Wellenglieds 22 weniger steif ausgebildet sein muss. Folglich können dadurch Kosten eingespart werden.

Die Kupplungsvorrichtung 18 weist ferner eine Rastverbindung 46 auf, mit welcher das Kupplungsglied 28 mit dem zweiten Endabschnitt 42 des zweiten Wellenglieds 22 lösbar verbunden werden kann. Durch die Rastverbindung 46 wird die Montage der Kupplungsvorrichtung 18 erleichtert. Dadurch, dass das Kupplungsglied 28 an dem zweiten Endabschnitt 42 und damit an dem zweiten Wellenglied 22 gehalten ist, muss das Kupplungsglied 28 nicht separat gestützt oder gehalten werden, wenn die Kupplungsvorrichtung montiert wird.

Die Rastverbindung 46 weist mehrere, beispielsweise zwei Rastelemente 48 auf, welche an dem zweiten Endabschnitt angeordnet sind. Vorzugsweise sind die beiden Rastelemente 48 diametral zueinander angeordnet.

Die Rastelemente 48 sind versetzt zu den zweiten Vorsprüngen 44 angeordnet. Vorzugsweise sind die Rastelemente 48 um ungefähr 90° zu den zweiten Vorsprüngen 44 angeordnet.

Die Rastelemente 48 können beispielsweise durch Rastnasen 50 gebildet sein. Die Rastnasen 50 erstrecken sich von dem zweiten Endabschnitt 42 aus axial in Richtung des Kupplungsglieds 28. Die rastwirksame Nase ist dabei radial nach außen gerichtet.

Die Rastverbindung 46 weist Gegenrastelemente 52 auf, welche komplementär zu den Rastelementen 48 ausgebildet sind. Vorzugsweise weist die Rastverbindung 46 zwei Gegenrastelemente 52 auf, welche an dem Kupplungsglied 28 gehalten sind und sich diametral gegenüberliegen. Die Gegenrastelemente 52 sind versetzt zu den zweiten Ausnehmungen 40 angeordnet. Vorzugsweise sind die Gegenrastelemente 52 um ungefähr 90°, bezogen auf eine Achse des Kupplungsgliedes 28, versetzt zu den zweiten Ausnehmungen 40 angeordnet. Die Gegenrastelemente 52 sind durch Rastkonturen 54 gebildet, welche an einer Innenseite 56 des umlaufenden Randes 32 angeordnet sind.

Dadurch können die Rastelemente 48 in die Gegenrastelemente 52 eingreifen und somit das Kupplungsglied 28 an dem zweiten Endabschnitt 42 des zweiten Wellenglieds 22 halten.

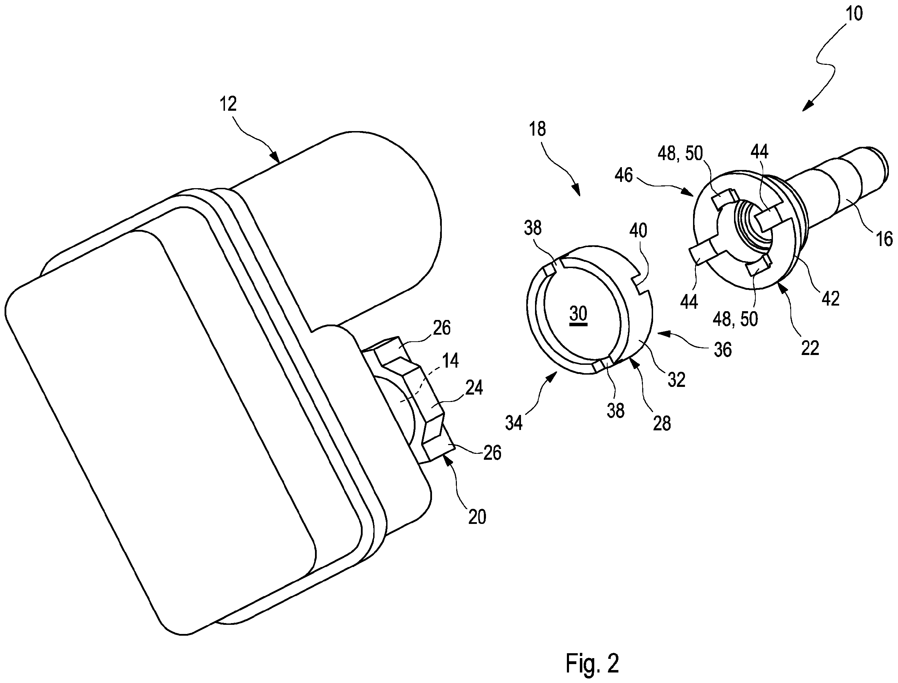

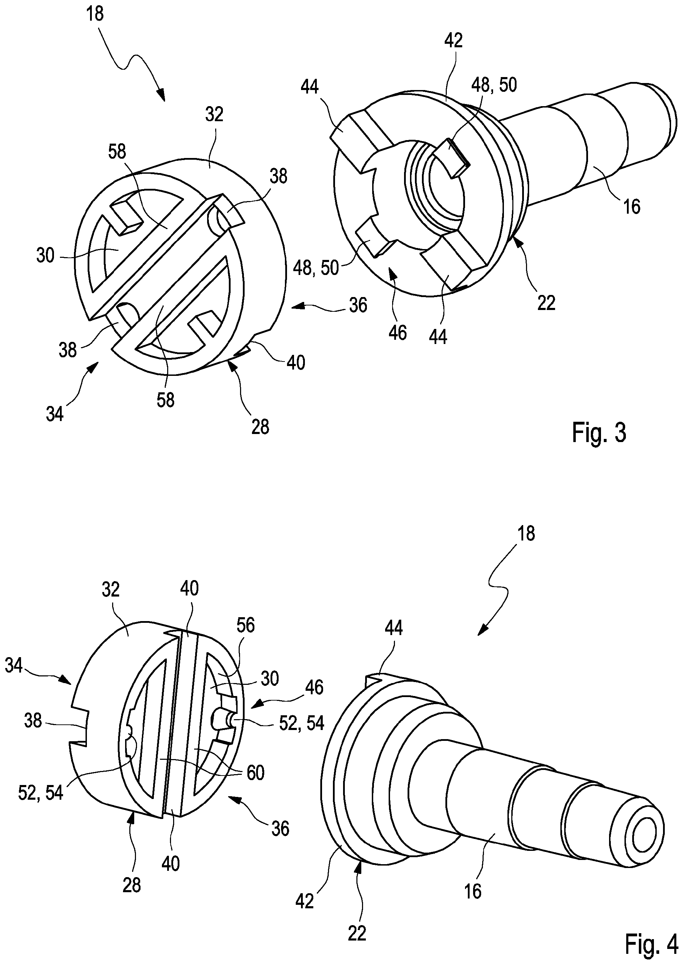

Eine in den Fig. 3 und 4 dargestellte zweite Ausführungsform der Kupplungsvorrichtung 18 unterscheidet sich von der in den Fig. 1 und 2 dargestellten ersten Ausführungsform der Kupplungsvorrichtung 18 dadurch, dass das Kupplungsglied 28 zusätzliche Verstärkungsstreben 58 aufweist.

Das Kupplungsglied 28 weist auf der ersten Seite 34 erste Verstärkungsstreben 58 auf. Die ersten Verstärkungsstreben 58 erstrecken sich von dem Grundkörper 30 aus in axialer Richtung. Die ersten Verstärkungsstreben 58 verbinden die ersten Ausnehmungen 38 derart, dass eine sich diametral erstreckende Nut gebildet ist. Die ersten Verstärkungsstreben 58 und der Rand 32 sind axial bündig zueinander.

Entsprechend sind auf der zweiten Seite 36 des Kupplungsglieds 28 zweite Verstärkungsstreben 60 ausgebildet.

Im Übrigen stimmt die in den Fig. 3 und 4 dargestellte zweite Ausführungsform hinsichtlich Aufbau und Funktion mit der in den Fig. 1 und 2 dargestellten ersten Ausführungsform der Kupplungsvorrichtung 18 überein, auf deren vorstehende Beschreibung insoweit Bezug genommen wird.

## Patentansprüche

1. Kupplungsvorrichtung zur Übertragung eines Drehmoments von einem ersten Wellenglied (20) auf ein axial gegenüberliegendes zweites Wellenglied (22), mit einem Kupplungsglied (28), das zwischen den beiden Wellengliedern (20,22) angeordnet ist, wobei das Kupplungsglied (28) einen scheibenförmigen Grundkörper (30) aufweist,
- wobei das Kupplungsglied (28) einen an dem Grundkörper (30) umlaufenden, ringförmigen, axial beidseitig über den Grundkörper (30) überstehenden Rand (32) aufweist,
- wobei in den ringförmigen Rand (32) auf einer ersten Seite (34) des Kupplungsgliedes (28) erste Ausnehmungen (38) eingebracht sind,
- wobei in den ringförmigen Rand (32) auf einer zweiten Seite (36) des Kupplungsgliedes (28) zweite Ausnehmungen (40) eingebracht sind,
- wobei das erste Wellenglied (20) einen ersten Endabschnitt (24) aufweist, der sich axial erstreckende erste Vorsprünge (26) aufweist,
- wobei mindestens ein solcher erster Vorsprung (26) des ersten Endabschnitts (24) in mindestens eine der ersten Ausnehmungen (38) des Kupplungsgliedes (28) eingreift,
- wobei das zweite Wellenglied (22) einen zweiten Endabschnitt (42) aufweist, der sich axial erstreckende zweite Vorsprünge (44) aufweist,
- wobei mindestens ein solcher zweiter Vorsprung (44) des zweiten Endabschnitts (42) in mindestens eine der zweiten Ausnehmungen (40) des Kupplungsgliedes (28) eingreift,
**dadurch gekennzeichnet,**
- **dass** der zweite Endabschnitt (42) mindestens ein Rastelement (48) aufweist und
- **dass** das Kupplungsglied (28) an der zweiten Seite (36) mindestens ein dazu komplementäres Gegenrastelement (52) aufweist.

2. Kupplungsvorrichtung nach Anspruch 1,
**dadurch gekennzeichnet,**
**dass** das jeweilige Rastelement (48) und das jeweilige Gegenrastelement (52) ineinander greifen und das Kupplungsglied (28) an dem zweiten Endabschnitt (42) axial halten.

3. Kupplungsvorrichtung nach Anspruch 1 oder 2,
**dadurch gekennzeichnet,**
- **dass** das jeweilige Rastelement (48) durch eine Rastnase (50) gebildet ist, und/oder
- **dass** das jeweilige Gegenrastelement (52) durch eine Rastkontur (54) gebildet ist, die an dem ringförmigen Rand (32) ausgebildet ist.

4. Kupplungsvorrichtung nach einem der Ansprüche 1 bis 3,
**dadurch gekennzeichnet,**
**dass** das jeweilige Gegenrastelement (52) an einer über den Grundkörper (30) vorstehenden Innenseite (56) des ringförmigen Randes (32) ausgebildet ist.

5. Kupplungsvorrichtung nach einem der Ansprüche 1 bis 4,
**dadurch gekennzeichnet,**
- **dass** zwei Rastelemente (48) vorgesehen sind, die sich diametral gegenüberliegen, und/oder
- **dass** zwei Gegenrastelemente (52) vorgesehen sind. die sich diametral gegenüberliegen.

6. Kupplungsvorrichtung nach einem der Ansprüche 1 bis 5,
**dadurch gekennzeichnet,**
**dass** jeweils zwei solche Ausnehmungen (38, 40) auf der jeweiligen Seite (34, 36) des Kupplungsgliedes (28) sich diametral gegenüberliegen.

7. Kupplungsvorrichtung nach einem der Ansprüche 1 bis 6,
**dadurch gekennzeichnet,**
**dass** auf der ersten Seite (34) und auf der zweiten Seite (36) des Kupplungsgliedes (28) jeweils zwei Ausnehmungen (38, 40) in den ringförmigen Rand (32) eingebracht sind.

8. Kupplungsvorrichtung nach Anspruch 7,
**dadurch gekennzeichnet,**
**dass** die ersten Ausnehmungen (38) der ersten Seite (34) um ungefähr 90° versetzt zu den zweiten Ausnehmungen (40) der zweiten Seite (36) angeordnet sind.

9. Kupplungsvorrichtung nach einem der Ansprüche 1 bis 8,
**dadurch gekennzeichnet,**
- **dass** der erste Endabschnitt (24) zwei sich axial erstreckende erste Vorsprünge (26) aufweist, und
- **dass** der zweite Endabschnitt (42) zwei sich axial erstreckende zweite Vorsprünge (44) aufweist.

10. Kupplungsvorrichtung nach Anspruch 9,
**dadurch gekennzeichnet,**
- **dass** die ersten Vorsprünge (26) des ersten Endabschnitts (24) exzentrisch angeordnet sind und sich diametral gegenüberliegen und/oder
- **dass** die zweiten Vorsprünge (44) des zweiten Endabschnitts (42) exzentrisch angeordnet sind und sich diametral gegenüberliegen.

11. Kupplungsvorrichtung nach einem der Ansprüche 1 bis 10,
**dadurch gekennzeichnet,**
- **dass** die ersten Vorsprünge (26) des ersten Endabschnitts (24) jeweils in eine der ersten Ausnehmungen (38) auf der ersten Seite (34) des Kupplungsgliedes (28) eingreifen.
- **dass** die zweiten Vorsprünge (44) des zweiten Endabschnitts (42) jeweils in eine der zweiten Ausnehmungen (40) auf der zweiten Seite (36) des Kupplungsgliedes (28) eingreifen.

12. Klappeneinrichtung für eine Frischluftanlage,
- mit mindestens einer Klappe, die drehfest mit einer Klappenwelle (16) gekoppelt ist,
- mit einem Stellantrieb (12) zum Antreiben der Welle, der eine Antriebswelle (14) aufweist,
- mit einer Kupplungsvorrichtung (18) nach einem der Ansprüche 1 bis 11,
- wobei das erste Wellenglied (20) drehfest mit der Antriebswelle (14) verbunden ist, während das zweite Wellenglied (22) drehfest mit der Klappenwelle (16) verbunden ist.

13. Frischluftanlage für ein Kraftfahrzeug mit einem Verteilergehäuse, das einen Einlass und einen Auslass umfasst, einer Klappeneinrichtung (10) nach Anspruch 12, wobei der Einlass und/oder der Auslass durch eine Klappe der Klappeneinrichtung gesteuert ist.

## Claims

1. A clutch apparatus for transmitting a torque from a first shaft member (20) to a second shaft member (22) located axially opposite, having a clutch member (28) which is arranged between the two shaft members (20, 22), wherein the clutch member (28) has a disk-shaped main body (30),
- wherein the clutch member (28) has an annular rim (32) that encircles the main body (30) and protrudes beyond the main body (30) axially on both sides,
- wherein first recesses (38) have been introduced into the annular rim (32) on a first side (34) of the clutch member (28),
- wherein second recesses (40) have been introduced into the annular rim (32) on a second side (36) of the clutch member (28),
- wherein the first shaft member (20) has a first end portion (24) which has axially extending first protrusions (26),
- wherein at least one such first protrusion (26) of the first end portion (24) engages in at least one of the first recesses (38) of the clutch member (28),
- wherein the second shaft member (22) has a second end portion (42) which has axially extending second protrusions (44),
- wherein at least one such second protrusion (44) of the second end portion (42) engages in at least one of the second recesses (40) of the clutch member (28),
**characterized in that**
- the second end portion (42) has at least one latching element (48) and
- the clutch member (28) has at least one mating latching element (52), complementary thereto, on the second side (36).

2. The clutch apparatus according to claim 1,
**characterized in that**
the respective latching element (48) and the respective mating latching element (52) engage into one another and hold the clutch member (28) axially on the second end portion (42).

3. The clutch apparatus according to claim 1 or 2,
**characterized in that**
- the respective latching element (48) is formed by a latching nose (50), and/or
- the respective mating latching element (52) is formed by a latching contour (54), which is formed on the annular rim (32).

4. The clutch apparatus according to one of claims 1 to 3,
**characterized in that**
the respective mating latching element (52) is formed on an inner side (56) of the annular rim (32) protruding beyond the main body (30).

5. The clutch apparatus according to one of claims 1 to 4,
**characterized in that**
- two latching elements (48) are provided, which lie diametrically opposite one another, and/or
- two mating latching elements (52) are provided, which lie diametrically opposite one another.

6. The clutch apparatus according to one of claims 1 to 5,
**characterized in that**
respectively two such recesses (38, 40) lie diametrically opposite one another on the respective side (34, 36) of the clutch member (28).

7. The clutch apparatus according to one of claims 1 to 6,
**characterized in that**
on the first side (34) and on the second side (36) of the clutch member (28) respectively two recesses (38, 40) are introduced into the annular rim (32).

8. The clutch apparatus according to claim 7,
**characterized in that**
the first recesses (38) of the first side (34) are arranged offset through approximately 90° to the second recesses (40) of the second side (36).

9. The clutch apparatus according to one of claims 1 to 8,
**characterized in that**
- the first end portion (24) has two axially extending first protrusions (26), and
- the second end portion (42) has two axially extending second protrusions (44).

10. The clutch apparatus according to claim 9,
**characterized in that**
- the first protrusions (26) of the first end portion (24) are arranged eccentrically and lie diametrically opposite one another and/or
- the second protrusions (44) of the second end portion (42) are arranged eccentrically and lie diametrically opposite one another.

11. The clutch apparatus according to one of claims 1 to 10,
**characterized in that**
- the first protrusions (26) of the first end portion (24) engage respectively into one of the first recesses (38) on the first side (34) of the clutch member (28),
- the second protrusions (44) of the second end portion (42) engage respectively into one of the second recesses (40) on the second side (36) of the clutch member (28).

12. A flap device for a fresh-air system,
- with at least one flap, which is coupled to a flap shaft (16) in a torque-proof manner,
- with an actuator (12) for driving the shaft, which actuator has a drive shaft (14),
- with a clutch apparatus (18) according to one of claims 1 to 11,
- wherein the first shaft member (20) is connected to the drive shaft (14) in a torque-proof manner, whilst the second shaft member (22) is connected to the flap shaft (16) in a torque-proof manner.

13. A fresh-air system for a motor vehicle with a distributor housing, which comprises an inlet and an outlet, with a flap device (10) according to claim 12, wherein the inlet and/or outlet is controlled by a flap of the flap device.

## Revendications

1. Dispositif d'accouplement destiné à transférer un couple de rotation à partir d'un premier élément d'arbre (20) à un second élément d'arbre axialement opposé (22), avec un élément d'accouplement (28) qui est agencé entre les deux éléments d'arbre (20,22), dans lequel l'élément d'accouplement (28) présente un corps de base en forme de disque (30),
- dans lequel l'élément d'accouplement (28) présente un bord (32) annulaire qui entoure le corps de base (30) et qui fait saillie axialement bilatéralement sur le corps de base (30),
- dans lequel des premiers évidements (38) sont ménagés dans le bord annulaire (32) sur un premier côté (34) de l'élément d'accouplement (28),
- dans lequel des seconds évidements (40) sont ménagés dans le bord annulaire (32) sur un second côté (36) de l'élément d'accouplement (28),
- dans lequel le premier élément d'arbre (20) présente une première section d'extrémité (24), qui présente des premières saillies s'étendant axialement (26),
- dans lequel au moins une telle première saillie (26) de la première section d'extrémité (24) vient en prise dans au moins un des premiers évidements (38) de l'élément d'accouplement (28),
- dans lequel le second élément d'arbre (22) présente une seconde section d'extrémité (42), qui présente des secondes saillies s'étendant axialement (44),
- dans lequel au moins une telle seconde saillie (44) de la seconde section d'extrémité (42) vient en prise dans au moins un des seconds évidements (40) de l'élément d'accouplement (28),
**caractérisé en ce que**
- la seconde section d'extrémité (42) présente au moins un élément d'encliquetage (48) et
- l'élément d'accouplement (28) du second côté (36) présente au moins un élément d'encliquetage opposé complémentaire (52).

2. Dispositif d'accouplement selon la revendication 1,
**caractérisé en ce que**
l'élément d'encliquetage respectif (48) et l'élément d'encliquetage opposé respectif (52) viennent en prise l'un avec l'autre et maintiennent l'élément d'accouplement (28) axialement au niveau de la seconde section d'extrémité (42).

3. Dispositif d'accouplement selon la revendication 1 ou 2,
**caractérisé en ce que**
- l'élément d'encliquetage respectif (48) est formé par un nez d'encliquetage (50), et/ou
- l'élément d'encliquetage opposé respectif (52) est formé par un contour de blocage (54), qui est formé dans le bord annulaire (32).

4. Dispositif d'accouplement selon l'une des revendications 1 à 3,
**caractérisé en ce que**
l'élément d'encliquetage opposé respectif (52) est formé sur un côté intérieur (56) du bord annulaire (32) faisant saillie à partir du corps de base (30).

5. Dispositif d'accouplement selon l'une des revendications 1 à 4,
**caractérisé en ce que**
- deux éléments d'encliquetage (48) sont prévus, qui sont diamétralement opposés, et/ou
- deux éléments d'encliquetage opposés (52) sont prévus, qui sont diamétralement opposés.

6. Dispositif d'accouplement selon l'une des revendications 1 à 5,
**caractérisé en ce que**
deux tels évidements (38, 40) de chaque côté (34, 36) de l'élément d'accouplement (28) sont diamétralement opposés.

7. Dispositif d'accouplement selon l'une des revendications 1 à 6,
**caractérisé en ce que**
sur le premier côté (34) et sur le second côté (36) de l'élément d'accouplement (28) sont ménagés respectivement deux évidements (38, 40) dans le bord annulaire (32).

8. Dispositif d'accouplement selon la revendication 7,
**caractérisé en ce que**
les premiers évidements (38) du premier côté (34) sont agencés décalés d'environ 90° par rapport aux seconds évidements (40) du second côté (36).

9. Dispositif d'accouplement selon l'une des revendications 1 à 8,
**caractérisé en ce que**
- la première section d'extrémité (24) présente deux premières saillies s'étendant axialement (26), et
- la seconde section d'extrémité (42) présente deux secondes saillies s'étendant axialement (44).

10. Dispositif d'accouplement selon la revendication 9,
**caractérisé en ce que**
- les premières saillies (26) de la première section d'extrémité (24) sont agencées de manière excentrée et sont diamétralement opposées et/ou
- les secondes saillies (44) de la seconde section d'extrémité (42) sont agencées de manière excentrée et sont diamétralement opposées.

11. Dispositif d'accouplement selon l'une des revendications 1 à 10,
**caractérisé en ce que**
- les premières saillies (26) de la première section d'extrémité (24) viennent en prise respectivement dans l'un des premiers évidements (38) sur le premier côté (34) de l'élément d'accouplement (28),
- les secondes saillies (44) de la seconde section d'extrémité (42) viennent en prise respectivement dans l'un des seconds évidements (40) sur le second côté (36) de l'élément d'accouplement (28).

12. Dispositif de clapet pour une installation d'alimentation en air frais,
- avec au moins un clapet, qui est couplé solidairement en rotation à un arbre de clapet (16),
- avec un entraînement de réglage (12) pour entraîner l'arbre, qui présente un arbre d'entraînement (14),
- avec un dispositif d'accouplement (18) selon l'une des revendications 1 à 11,
- dans lequel le premier élément d'arbre (20) est connecté solidaire en rotation avec l'arbre d'entraînement (14), tandis que le second élément d'arbre (22) est connecté solidaire en rotation avec l'arbre de clapet (16).

13. Installation d'air frais pour un véhicule à moteur ayant un boîtier de répartition comprenant une entrée et une sortie, un dispositif de clapet (10) selon la revendication 12, dans lequel l'entrée et/ou la sortie est commandée par un clapet du dispositif de clapet.
